# EUROPEAN PATENT SPECIFICATION

(11) **EP 3 858 930 B1**
(45) Date of publication and mention of the grant of the patent: **11.12.2024**
(21) Application number: 21154079.4
(22) Date of filing: 28.01.2021
(51) Int. Cl.: C09J 5/06, B08B 3/04, B08B 9/08

(54) **A METHOD FOR REMOVING AN ADHESIVE LABEL**
VERFAHREN ZUM ENTFERNEN EINES KLEBEETIKETTS
PROCÉDÉ PERMETTANT D'ÉLIMINER UNE ÉTIQUETTE ADHÉSIVE

(30) Priority: 31.01.2020 US 202062968190 P
(43) Date of publication of application: 04.08.2021
(73) Proprietor: UPM Raflatac Oy, 33310 Tampere (FI)
(72) Inventor: Pernecker, Tibor, 00100 Helsinki (FI)
(74) Representative: Berggren Oy

(56) References cited:
- WO-A1-2017/143009
- WO-A2-2008/057926

## Description

### Technical field

The specification relates to a method for removing an adhesive label from a surface of an item.

### Background

It is general practice to apply a label to the surface of containers, such as bottles made of polymer or glass, to provide decoration, identification and/or information, for example, on the contents of the container. The use of polymer containers, for example bottles made of thermoplastic polymers, has been increasing. The containers, such as bottles in the beverage industry, are generally re-used or recycled and thus there is a need for washing processes wherein the labels are easily removed from the surface of the container. Especially tacky adhesive remnants may cause so-called stickies to form, thus interfering with the washing and recycling processes.

Document WO 2017/143009 A1 discloses a method for removing labels from a surface. The method comprises applying a label removing composition to a surface in need of removal of an adhesive material. The label removing composition comprises an aqueous or non-aqueous basic organic solvent and/or an amidine solvent. The label removing composition may include a chelant. Suitable labels include paper and metalized labels.

### Summary

It is an aim of this specification to provide an improved method for removing an adhesive label from a surface of an item, wherein the disadvantages caused by the tacky adhesive remnants to the washing process and/or the recycling process may be avoided.

According to an embodiment, a method for removing an adhesive label from a surface of an item is provided. The adhesive label comprises a face layer and an adhesive layer. The face layer comprises a thermoplastic polymer and the adhesive layer comprises acrylic-based adhesive. The method comprises subjecting the item having the adhesive label adhered on its surface to an aqueous washing solution containing an alkaline agent at an elevated temperature so as to detach the adhesive label from the surface of the item, and subjecting the detached adhesive label to a crosslinking agent so as to detackify the adhesive layer. The crosslinking agent is a transition metal chelate compound.

### Brief description of the drawings

- Fig. 1: illustrates, by way of an example, an adhesive label removed from the surface of an item,
- Fig. 2: illustrates, by way of an example, an adhesive label removed from the surface of an item, and
- Fig. 3: illustrates, by way of an example, a flow chart of a method for removing an adhesive label.

The figures are schematic. The figures are not in particular scale.

### Detailed description

The solution is described in the following in more detail with reference to some embodiments, which shall not be regarded as limiting.

In this description and claims, the percentage values relating to an amount of a material are percentages by weight (wt.%) unless otherwise indicated. Term "comprising" may be used as an open term, but it also comprises the closed term "consisting of". Unit of temperature expressed as degrees C corresponds to °C.

A label is a piece of material to be applied onto items of different shapes and materials. An item may also be called an article. An item may be a package, such as a bottle. A label comprises at least a face material also referred to as a face stock, a face or a face layer. A typical way to adhere the label onto an article is by use of adhesive. The label comprising an adhesive layer is referred to as an adhesive label. The adhesive may comprise pressure sensitive adhesive (PSA). A label comprising pressure sensitive adhesive may be referred to as a pressure sensitive adhesive label. Pressure sensitive adhesive labels may be referred to as self-adhesive labels. The labels comprising PSA can be adhered to most surfaces through an adhesive layer without the use of a secondary agent, such as a solvent, or heat to strengthen the bond. The PSA forms a bond when pressure is applied onto the label at ambient temperature (e.g. between 15 and 35°C) or for cold applications even under freezing temperatures below 0°C, adhering the label to the item to be labelled. Examples of pressure-sensitive adhesives include water based (water-borne) PSAs, solvent based PSAs and solid PSAs. Solid PSAs are melted during application to the surface to be coated and may also be referred to as hot-melt PSAs. A label may further comprise other adhesive(s).

A wash-off label, also referred to as a washable label, refers to a label removable (detachable) from the surface of the item attached to during subsequent washing process. A wash-off label may comprise an adhesive layer sensitive to washing conditions.

An adhesive sensitive to washing conditions refers to adhesives, wherein the adhesion of the adhesive decreases at washing conditions. The adhesive sensitive to washing conditions is able to reduce its adhesion (tackiness) in washing conditions. The washing conditions generally comprise alkaline conditions and/or increased temperature. Preferably the adhesion of the adhesive to the labelled item decreases more than the adhesion to the face layer so that the adhesive remains attached to the face layer. The increased temperature may be at least 50 °C, for example 65 °C, 75 °C, 80 °C, or 90 °C. The alkaline conditions refer to an aqueous solution containing alkaline agent, such as NaOH, KOH or combination thereof. Probably the most common alkaline agent is sodium hydroxide (NaOH), which is also called caustic soda. The alkaline conditions (i.e. the alkaline liquid) generally contains about 0.5-10% or 1-4% (by weight) of the alkaline agent(s), for example about 2%.

As an example, a label laminate comprises a face layer, a PSA layer, and further a release liner. The face layer and the release liner are typically laminated together having the adhesive layer in between, which laminated structure is referred to as a label laminate. The release liner is used for protecting the adhesive layer but also for allowing easier handling of the label up to the point of labelling wherein the label face layer is dispensed and adhered to a surface of an item. In labelling the release liner is removed and disposed of. A wash-off label laminate refers to a label laminate structure comprising e.g. PSA layer sensitive to washing conditions and wherein the adhesion of the adhesive decreases at washing conditions so as to allow removal of the label from the surface labelled.

As an example, a label is a linerless self-adhesive label. Linerless label webs or labels are provided to users without release liner over the adhesive layer. Elimination of release liners reduces the material costs of the labels but also avoids the disposal of the release liner after the labelling. Moreover, the exclusion of the release liner decreases the thickness in a roll of labels and more labels can be provided per roll.

Labels may be used in wide variety of labelling applications and end-use areas, such as beverage labelling, food labelling, home and personal care product labelling, and labelling of industrial products. The surface of the labelled article, i.e. the labelled item, may be for example plastic, glass, metal, or paper based. The labelled article may be for example a container, such as a bottle, jar, canister, can, tin or the like. The label may also be applied to semi-rigid or flexible packages used for e.g. packaging of food. Examples of articles include glass bottles, metal bottles, polyethylene terephthalate (PET) bottles, and bottles made of polyolefin, such as high density polyethylene (HDPE) and polypropylene (PP). The label may surround the labelled article, such as a bottle, completely or partially.

Term "face layer" refers to a top layer of the label, also called as a face stock or a face material. The face layer is the layer that is adhered to the surface of an item during labelling through an adhesive layer. The face layer may comprise e.g. printing in order to provide information and/or visual effect, such as information of the content of the item labelled. Printable face layer is suitable for printing by any of the known printing methods, such as with gravure, flexographic process, offset, screen or letter-press. The printing may exist on a top surface, reverse side or both top and reverse side of the face layer. A label consisting of a face layer, printing layer and an adhesive layer may be referred to as a printed label.

Term "release liner" refers to a structure comprising a backing material layer as a substrate and a release coating layer on a surface of the substrate. In other words, the backing material is usually coated with a thin layer of release agent, such as silicone. The release coating layer provides a non-adherent surface i.e. low adhesion and release effect against the adhesive layer. The release liner protects the adhesive layer during shipment and storage. It further allows for efficient handling of individual labels after the labels are die-cut and the surrounding matrix is stripped up to the point wherein the individual labels are dispensed on a labelling line. During dispensing the release liner is peeled off and discarded.

A method for removing an adhesive label from a surface of an item is provided. Within context of this specification removing the adhesive label is implemented by washing said label off from the surface it has been adhered to. The item may be a recyclable container, such as a glass container or a polymer container. The polymer container may be a polyethylene terephthalate (PET) bottle.

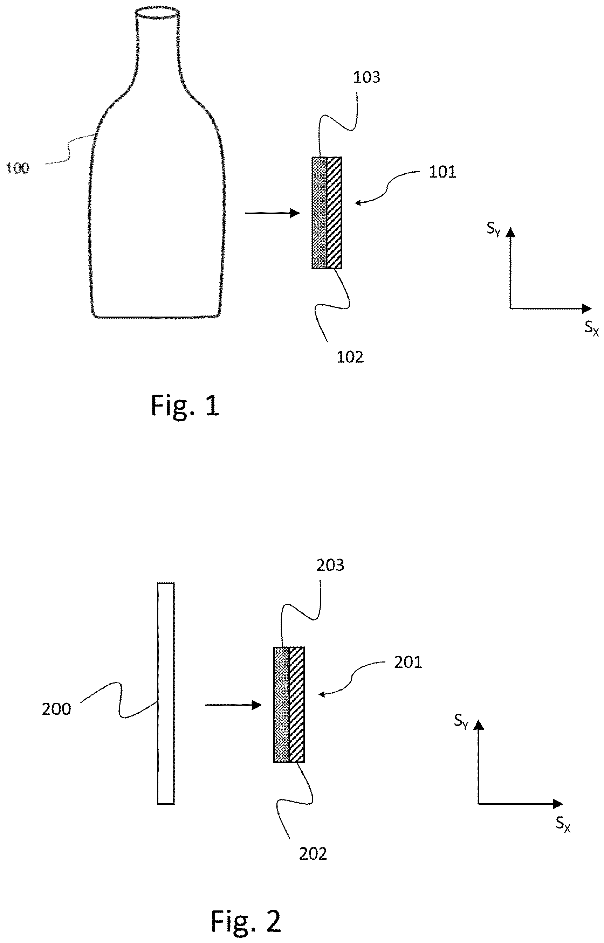

Figs. 1 and 2 illustrate an adhesive label 101, 201 removed from a surface of an item 100, 200. In Fig. 1 the item 100 is a container. In Fig. 2 the item 200 may be a container or a piece of a container.

According to an embodiment, the adhesive label 101, 201 comprises a face layer 102, 202 and an adhesive layer 103, 203. The face layer 102, 202 comprises a thermoplastic polymer. The face layer 102, 202 may comprise for example polypropylene or polyethylene. The face layer 102, 202 may comprise for example a biaxially oriented polypropylene film. The face layer 102, 202 may be a monolayer or a multilayer. The adhesive label may further comprise a primer layer. The primer layer may be arranged in between the face layer and the adhesive layer. The primer layer may be arranged to increase the adherence of the adhesive layer to the face layer.

The adhesive layer 103, 203 comprises acrylic-based adhesive. The adhesive layer 103, 203 may comprise pressure sensitive adhesive. The adhesive layer 103, 203 may be a monolayer or a multilayer.

Acrylics are a type of synthetic polymer which fall into the thermoplastic resin family. Acrylics provide strong, durable adhesion at normal temperatures and conditions. Acrylic adhesives are based on acrylic polymers, also called acrylate polymers. Acrylate monomers, used to form acrylate polymers, are based on the structure of acrylic acid, which comprises a vinyl group and a carboxylic acid terminus. Acrylic polymers are characteristically tacky and they can be used as pressure sensitive adhesives without any modification. In general, acrylic adhesives have good ageing and UV-resistance properties. They are polar in nature and therefore give good adhesion to polar substrates.

In an example, the adhesive layer comprises or consists of waterborne pressure sensitive adhesive comprising acrylic polymers based on alkyl acrylic ester(s). An amount of acrylic polymers may be, in dry weight, between 60 and 90 wt.%, preferably between 60 and 85 wt.%, between 70 and 85 wt.%, or between 70 and 80 wt.%. In an example, glass transition temperature (T_{g}) of the acrylic polymer(s) may be between -55 and -20 °C. In addition to acrylic polymer(s), the pressure sensitive adhesive may include vinyl acetate ethylene copolymer(s). An amount of vinyl acetate ethylene copolymer(s) may be between 10 and 40 wt.% (in dry weight).

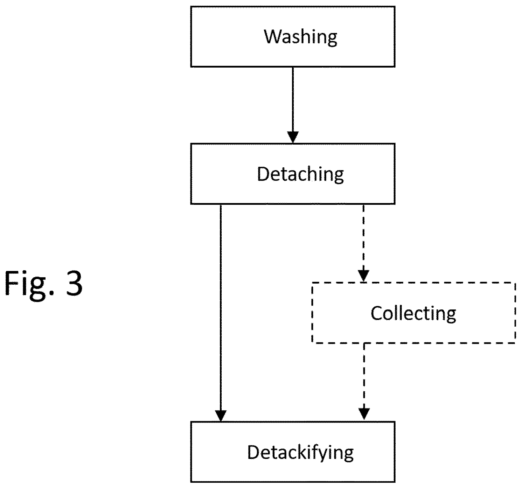

Fig. 3 illustrates a schematic flow chart of a method for removing an adhesive label from a surface of an item. The method comprises subjecting the item having the adhesive label adhered on its surface to a washing solution, i.e. the step of washing, so as to detach the adhesive label from the surface of the item. The method further comprises subjecting the detached adhesive label to a crosslinking agent so as to detackify the adhesive layer, i.e. the step of detackifying. Although step of detaching may not be considered as a distinct, separate step, it is presented in the flow chart, as being subsequent outcome of the washing and a prerequisite for the detackifying step.

According to an embodiment, the item 100, 200 having the adhesive label 101, 201 adhered on its surface is subjected to a washing solution at an elevated temperature so as to detach the adhesive label 101, 201 from the surface of the item. The items in the washing solution are typically agitated. In case of polymer containers, the containers may be crushed into pieces, i.e. flakes, before exposing them to the washing solution. The item 100, 200 having the adhesive label 101, 201 adhered on its surface may also be called a labelled item.

The washing process comprises an elevated temperature and an alkaline washing solution. Washing conditions may comprise temperatures in the range of 60-90 °C (degrees C), or 65-85 °C, or 65-75 °C. Washing solution comprises an alkaline agent. The washing solution may comprise for example sodium hydroxide (NaOH) or potassium hydroxide (KOH). The washing solution may comprise 1-4 %, preferably 1-2 % alkaline agent in aqueous solution.

Wash-off time, i.e. the time the adhesive label 101, 201 and the item 100, 200 and/or the pieces of the item are subjected to the washing solution may be from 1 to 15 minutes, preferably from 5 to 10 minutes, for example 10 minutes.

Within the wash-off time, at least the face layer may be detached from the surface of the item. In a case solely the face layer is detached, the adhesive layer or at least most of the adhesive layer remains on the surface of the item.

According to an embodiment, within the wash-off time, the adhesive label 101, 201, i.e. both the face layer 102, 202 and the adhesive layer 103, 203, are detached from the surface of the item. The adhesive layer 103, 203 or at least most of the adhesive layer 103, 203 remains with the face layer 102, 202. Within the wash-off time the adhesive layer 103, 203 is to be exposed to the washing solution. After the wash-off time the washing solution comprises the item and/or pieces of the item and the detached adhesive label 101, 201.

The detached adhesive label 101, 201 is subjected to a crosslinking agent so as to detackify the adhesive layer 103, 203.

The crosslinking agent may be added to the washing solution. The crosslinking agent may be added to the washing solution comprising the item and/or pieces of the item and the detached adhesive label 101, 201.

Alternatively, the adhesive label 101, 201, i.e. the face layer 102, 202 having the adhesive layer 103, 203 adhered to it may be collected and thus separated from the washing solution prior to subjecting it to the crosslinking agent. The collecting step is shown in Fig. 3.

The crosslinking agent is a compound that is arranged to detackify or deaden the adhesive layer. Thus, the crosslinking agent is arranged to cause the adhesive layer to lose its tackiness. Detackifying or deadening the adhesive layer may also be called deactivating the adhesive layer. The crosslinking agent may also be called a chelating agent or a chelate compound. The crosslinking agent is a transition metal chelate compound. For example, the crosslinking agent may be zinc ammonium zirconium carbonate (ZZA). The crosslinking agent may be arranged to crosslink via reacting with oxygen of the acryloyl group comprised by the acrylic-based adhesive.

Having the adhesive layer being detackified the adhesive labels do not adhere, i.e. stick to each other or to any other items, thus facilitating the handling and/or recycling process of the detached labels. Whereupon the crosslinking agent is added to the washing solution, detackification of the adhesive layer may also improve the efficiency of the handling and/or recycling process of the items, as the once detached and afterwards detackified labels may not anymore adhere to the items and/or pieces of the items.

According to an embodiment, the detached adhesive label 101, 201 is subjected to the crosslinking agent for 1 to 15 minutes, preferably for 5 to 10 minutes, for example for 10 minutes.

According to an embodiment, an amount of the crosslinking agent may vary from 0.1 to 50 wt.%. Preferably the amount of the crosslinking agent is 10-40 wt.%, more preferably 20-30 wt.%. The crosslinking agent used may be in form of an aqueous solution comprising the crosslinking agent.

After the above described washing process, the item and/or the pieces of the item may be rinsed so as to remove the washing solution.

Prior to the washing process the labelled item may be subjected to a pre-wash in a pre-wash chamber at for example 50 °C for about one minute.

In an example, an adhesive label comprising a face layer of a biaxially oriented polypropylene (BOPP) film and an adhesive layer of an acrylic-based adhesive, adhered onto a surface of a PET bottle was subjected to a washing solution comprising 2.8 wt.% of KOH at 65 °C for 10 minutes. Thereafter, 30 wt.% of zinc ammonium zirconium carbonate was added to the washing solution. The solution was removed from heat and left to soak for 10 minutes. The bottle and the label pieces were removed from the washing solution and allowed to dry. As a result, a cracked and a non-tacky (detackified) adhesive layer was obtained.

## Claims

1. A method for removing an adhesive label (101, 201) from a surface of an item (100, 200), wherein the adhesive label (101, 201) comprises a face layer (102, 202) and an adhesive layer (103, 203), the face layer (102, 202) comprises a thermoplastic polymer, and the adhesive layer (103, 203) comprises acrylic-based adhesive, the method comprising
- subjecting the item (100, 200) having the adhesive label (101, 201) adhered on its surface to an aqueous washing solution containing an alkaline agent at an elevated temperature so as to detach the adhesive label (101, 201) from the surface of the item, and
- subjecting the detached adhesive label (101, 201) to a crosslinking agent so as to detackify the adhesive layer (103, 203), the crosslinking agent being a transition metal chelate compound.

2. The method according to claim 1, comprising
- subjecting the item (100, 200) having the adhesive label (101, 201) adhered on its surface to the washing solution at elevated temperature for 1 to 15 minutes.

3. The method according to claim 2, wherein the crosslinking agent is added to the washing solution after subjecting the item (100, 200) having the adhesive label (101, 201) adhered on its surface to the washing solution at an elevated temperature for 1 to 15 minutes.

4. The method according to claim 1 or 2, further comprising
- collecting the detached adhesive label (101, 201) from the washing solution prior to subjecting it to the crosslinking agent.

5. The method according to any of the preceding claims, wherein the temperature of the washing solution is from 60 to 90 °C.

6. The method according to any of the preceding claims, wherein the crosslinking agent is zinc ammonium zirconium carbonate.

7. The method according to any of the preceding claims, further comprising
- subjecting the detached adhesive label (101, 201) to the crosslinking agent for 1 to 15 minutes.

8. The method according to any of the preceding claims, wherein amount of the crosslinking agent is from 0.1 to 50 wt.%.

## Patentansprüche

1. Verfahren zum Entfernen eines Klebeetiketts (101, 201) von einer Oberfläche eines Gegenstandes (100, 200), wobei das Klebeetikett (101, 201) eine Oberschicht (102, 202) und eine Klebstoffschicht (103, 203) umfasst, wobei die Oberschicht (102, 202) ein thermoplastisches Polymer umfasst und die Klebstoffschicht (103, 203) einen Klebstoff auf Acrylbasis umfasst, wobei das Verfahren Folgendes umfasst:
- Aussetzen des Gegenstandes (100, 200), auf dessen Oberfläche das Klebeetikett (101, 201) aufgeklebt ist, einer wässrigen Waschlösung, die ein alkalisches Mittel bei einer erhöhten Temperatur enthält, um so das Klebeetikett (101, 201) von der Oberfläche des Gegenstandes abzulösen, und
- Aussetzen des abgelösten Klebeetiketts (101, 201) einem Vernetzungsmittel, um so die Klebstoffschicht (103, 203) klebfrei zu machen, wobei das Vernetzungsmittel eine Übergangsmetall-Chelat-Verbindung ist.

2. Verfahren nach Anspruch 1, umfassend:
- Aussetzen des Gegenstandes (100, 200), auf dessen Oberfläche das Klebeetikett (101, 201) aufgeklebt ist, der Waschlösung bei erhöhter Temperatur für 1 bis 15 Minuten.

3. Verfahren nach Anspruch 2, wobei das Vernetzungsmittel der Waschlösung zugegeben wird, nachdem der Gegenstand (100, 200), auf dessen Oberfläche das Klebeetikett (101, 201) aufgeklebt ist, der Waschlösung bei erhöhter Temperatur für 1 bis 15 Minuten ausgesetzt wurde.

4. Verfahren nach Anspruch 1 oder 2, ferner umfassend:
- Auffangen des abgelösten Klebeetiketts (101, 201) aus der Waschlösung, bevor es dem Vernetzungsmittel ausgesetzt wird.

5. Verfahren nach irgendeinem der vorhergehenden Ansprüche, wobei die Temperatur der Waschlösung 60 bis 90 °C beträgt.

6. Verfahren nach irgendeinem der vorhergehenden Ansprüche, wobei das Vernetzungsmittel Zink-Ammonium-Zirkonium-Carbonat ist.

7. Verfahren nach irgendeinem der vorhergehenden Ansprüche, ferner umfassend:
- Aussetzen des abgelösten Klebeetiketts (101, 201) dem Vernetzungsmittel für 1 bis 15 Minuten.

8. Verfahren nach irgendeinem der vorhergehenden Ansprüche, wobei die Menge des Vernetzungsmittels von 0,1 bis 50 Gew.-% beträgt.

## Revendications

1. Procédé permettant d'éliminer une étiquette adhésive (101, 201) d'une surface d'un article (100, 200), dans lequel l'étiquette adhésive (101, 201) comprend une couche frontale (102, 202) et une couche adhésive (103, 203), la couche frontale (102, 202) comprend un polymère thermoplastique, et la couche adhésive (103, 203) comprend un adhésif à base d'acrylique, le procédé comprenant
- la soumission de l'article (100, 200) ayant l'étiquette adhésive (101, 201) collée sur sa surface à une solution de lavage aqueuse contenant un agent alcalin à une température élevée de manière à détacher l'étiquette adhésive (101, 201) de la surface de l'article, et
- la soumission de l'étiquette adhésive (101, 201) détachée à un agent de réticulation de manière à retirer à la couche adhésive (103, 203) son aspect collant, l'agent de réticulation étant un composé chélaté de métal de transition.

2. Procédé selon la revendication 1, comprenant
- la soumission de l'article (100, 200) ayant l'étiquette adhésive (101, 201) collée sur sa surface à la solution de lavage à température élevée pendant 1 à 15 minutes.

3. Procédé selon la revendication 2, dans lequel l'agent de réticulation est ajouté à la solution de lavage après avoir soumis l'article (100, 200) ayant l'étiquette adhésive (101, 201) collée sur sa surface à la solution de lavage à une température élevée pendant 1 à 15 minutes.

4. Procédé selon la revendication 1 ou 2, comprenant en outre
- la collecte de l'étiquette adhésive détachée (101, 201) de la solution de lavage avant de la soumettre à l'agent de réticulation.

5. Procédé selon l'une quelconque des revendications précédentes, dans lequel la température de la solution de lavage est de 60 à 90 °C.

6. Procédé selon l'une quelconque des revendications précédentes, dans lequel l'agent de réticulation est le carbonate de zinc ammonium zirconium.

7. Procédé selon l'une quelconque des revendications précédentes, comprenant en outre
- la soumission de l'étiquette adhésive (101, 201) détachée à l'agent de réticulation pendant 1 à 15 minutes.

8. Procédé selon l'une quelconque des revendications précédentes, dans lequel la quantité de l'agent de réticulation est de 0,1 à 50 % en poids.
